# EUROPEAN PATENT APPLICATION

(11) **EP 2 749 191 A1**
(43) Date of publication of application: **02.07.2014**
(21) Application number: 12199626.8
(22) Date of filing: 28.12.2012
(51) Int. Cl.: A47J 31/06

(54) **Filtering device for a teapot**

(71) Applicant: Aurlia Corporation, New Taipei City (TW)
(72) Inventor: Lin, Jung-Kuo, New Taipei City (TW)
(74) Representative: Viering, Jentschura & Partner Patent- und Rechtsanwälte

(57) **Abstract**

A filtering device for a teapot (20) has a net canister (10). The net canister (10) has a cup body (17) and a cup flange (12). The cup body (17) has multiple filtering holes (11) formed through the cup body (17). The cup flange (12) is formed around the opening top of the cup body (17) and has at least one connecting tab (13). The at least one connecting tab (13) is formed horizontally on the cup flange (12) and each has an elastic panel (14) and a clamping section (15). The elastic panel (14) is obliquely formed on and protrudes upwardly from the at least one connecting tab (13) to form an angle between the elastic panel (14) and the at least one connecting tab (13). The clamping section (15) is formed between the elastic panel (14) and the at least one connecting tab (13).

## Description

### 1. Field of the Invention

The present invention relates to a filtering device, and more particularly to a filtering device for a teapot, the filtering device can be used to hold a lid of the teapot securely and can be used to filter the tea leaves conveniently.

### 2. Description of Related Art

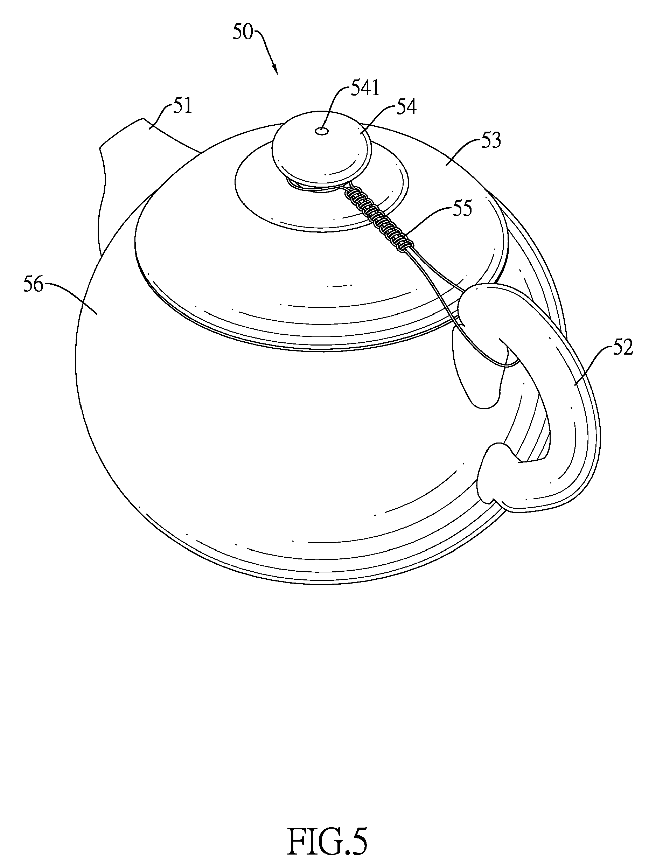

With reference to Fig. 5, a conventional teapot 50 has a body 56 and a lid 53. The body 56 has an external surface, a top, a chamber, a mouth, a spout 51 and a handle 52. The chamber is formed in the body 56. The mouth is formed through the top of the body 56 and communicates with the chamber of the body 56. The spout 51 is formed on and protrudes from the external surface of the body 56 and communicates with the chamber of the body 56. The handle 52 is formed on and protrudes from the external surface of the body 56 opposite to the spout 51. The lid 53 is detachably mounted on the mouth of the body 56 and has a top, a button 54 and a cord 55. The button 54 is formed on and protrudes from the top of the lid 53 and has a neck and a gas hole 541 formed through the lid 53 and communicating with the chamber of the body 56 via the mouth. The cord 55 is wound around the neck of the button 54 and the handle 52 to hold the lid 53 with the body 56.

In use, the tea leaves are putted into the chamber of the body 56 and the hot water is poured into the body 56 to brew the tea leaves. Then, the lid 53 is mounted on the mouth of the body 56 and the water vapor is exhausted out of the conventional teapot 50 via the gas hole 541 of the lid 53. When the lid 53 is mounted on the body 56, the hot water may overflow out of the body 56 and the user's fingers may scalded by the hot water when holds the lid 53. Furthermore, when the user wants to pour tea out of the body 56, the lid 53 may be opened easily by the water vapor or the tea leaves. Then, the user's fingers are needed to hold the body 56 and the lid 53 or the button 54 at the same time when pouring the tea and the user's fingers may be scalded by the hot water or the water vapor. Though the cord 54 can be used to connect the lid 53 with the body 56, but the lid 53 may be opened or separated from the body 56 easily by the water vapor or the tea leaves.

In addition, the conventional teapot further has a honeycomb net mounted in the spout 51 to prevent the tea leaves from flowing out of the body 56. However, the tea leaves may be blocked in the honeycomb net and this will increase the cleaning difficulty and may need special tools to clean the body 56.

To overcome the shortcomings, the present invention tends to provide a filtering device for a teapot to mitigate or obviate the aforementioned problems.

The main objective of the invention is to provide a filtering device for a teapot, the filtering device can be used to hold a lid of the teapot securely and can be used to filter the tea leaves conveniently.

The filtering device for a teapot in accordance with the present has a net canister. The net canister has a cup body and a cup flange. The cup body has multiple filtering holes formed through the cup body. The cup flange is formed around the opening top of the cup body and has at least one connecting tab. The at least one connecting tab is formed horizontally on the cup flange and each has an elastic panel and a clamping section. The elastic panel is obliquely formed on and protrudes upwardly from the at least one connecting tab to form an angle between the elastic panel and the at least one connecting tab. The clamping section is formed between the elastic panel and the at least one connecting tab.

Other objects, advantages and novel features of the invention will become more apparent from the following detailed description when taken in conjunction with the accompanying drawings.

### IN THE DRAWINGS:

Fig. 1 is a perspective view of a first embodiment of a filtering device in accordance with the present invention;
Fig. 2 is a side view in partial section of the filtering device in Fig. 1 mounted in a teapot between a body and a lid of the teapot;
Fig. 3 is another side view in partial section of the filtering device in Fig. 1 mounted in another teapot between a body and a lid of the teapot;
Fig. 4 is a perspective view of a second embodiment of a filtering device in accordance with the present invention; and
Fig. 5 is a perspective view of a conventional teapot in accordance with the prior art.

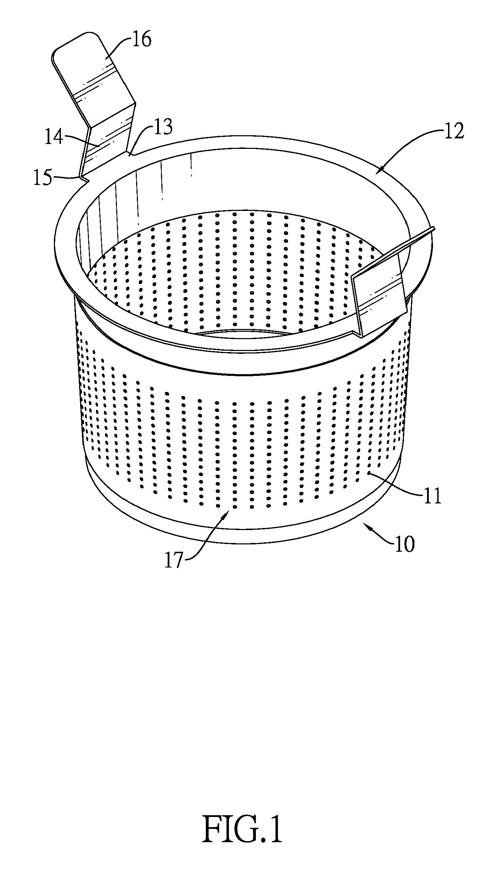

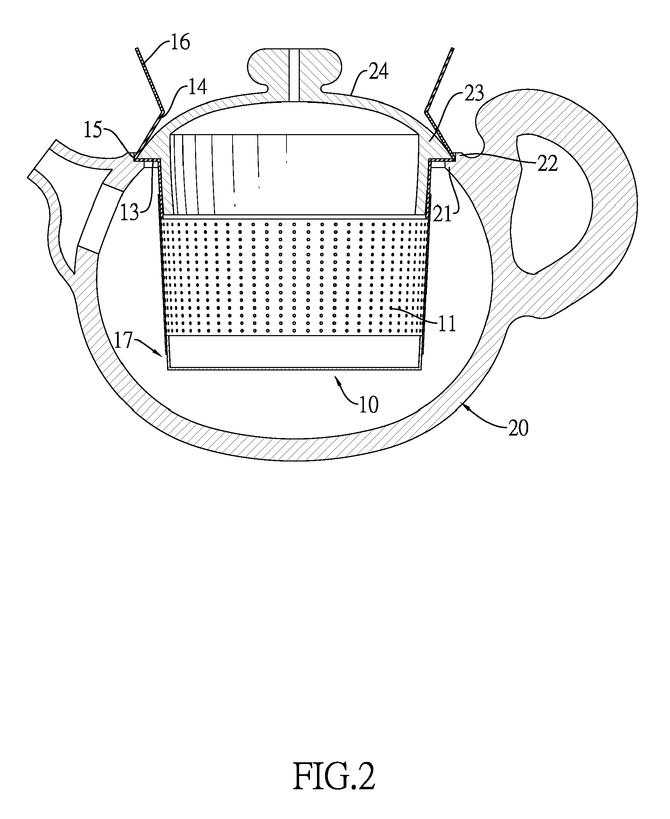

With reference to Figs. 1 and 2, a filtering device for a teapot 20 having a body and a lid 24, in accordance with the present invention comprises a net canister 10, and the net canister 10 has a cup body 17 and a cup flange 12.

The body of the teapot 20 has a top, a chamber, a mouth, an annular holding face 21 and an annular abutting wall 22. The chamber is formed in the body. The mouth is formed through the top of the body of the teapot 20 and communicates with the chamber of the body. The annular holding face 21 is horizontally formed on the body of the teapot 20 around the mouth. The annular abutting wall 22 is annularly formed on and protrudes from the annular holding face 21 and is perpendicular to the annular holding face 21. Then, the annular holding face 21 and the annular abutting wall 22 are formed a mounting recess above the mouth of the body of the teapot 20. The lid 24 is mounted in the mounting recess of the body of the teapot 20 to cover the mouth of the body and has a bottom flange 23 abutting the annular holding face 21.

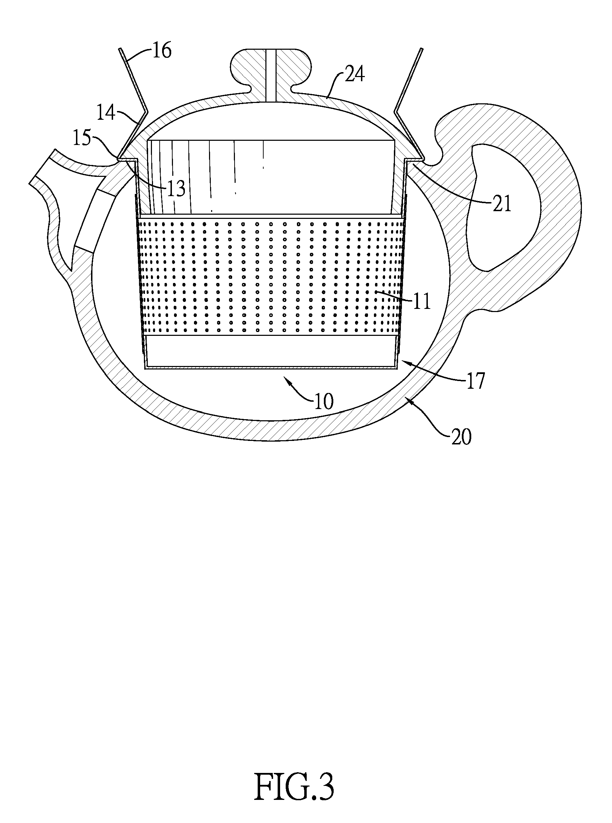

Furthermore, with reference to Fig. 3, another teapot 20 has similar structures substantially same as the structures in the above-mentioned teapot 20 except the teapot 20 only has an annular holding face 21 formed on the top of the body of the teapot 20 around the mouth.

The cup body 17 is mounted in the chamber of the body of the teapot 20 via the mouth, is held on the annular holding face 21 of the teapot 20 and has a close bottom, an opening top, an external surface and multiple filtering holes 11. The filtering holes 11 are formed through the external surface of the cup body 17 at intervals to enable the cup body 17 to being a filtering net. Then, the tea leaves can be put into the cup body 17 and the cup body 17 can prevent the tea leaves from flowing into a chamber of the body of the teapot 20.

The cup flange 12 is formed around the opening top of the cup body 17, is mounted in the mouth of the body of the teapot 20 and has two connecting tabs 13. The connecting tabs 13 are formed horizontally on the cup flange 12, face to each other and abut the annular holding face 21 of the body of the tea pot 20 to hold the net canister 10 in the chamber of the teapot 20. Each one of the connecting tabs 13 has a free end, an elastic panel 14, a clamping section 15 and a clamping arm 16. The free end of the connecting tab 13 is opposite to the cup flange 12.

The elastic panel 14 is obliquely formed on and protrudes upwardly and inwardly from the free end of the connecting tab 13 to form an angle between the elastic panel 14 and the corresponding connecting tab 13, abuts the annular abutting wall 22 of the body of the teapot 20 and has an upper end. The clamping section 15 is formed at the connection of the elastic panel 14 and the corresponding connecting tab 13. Then, the connecting tabs 13 and the elastic panels 14 clamp the bottom flange 23 of the lid 24 securely at the clamping sections 15 to hold the lid 24 with the body of the teapot 20 to prevent the lid 24 separating from the mouth of the body of the teapot 20 as shown in Figs. 2 and 3.

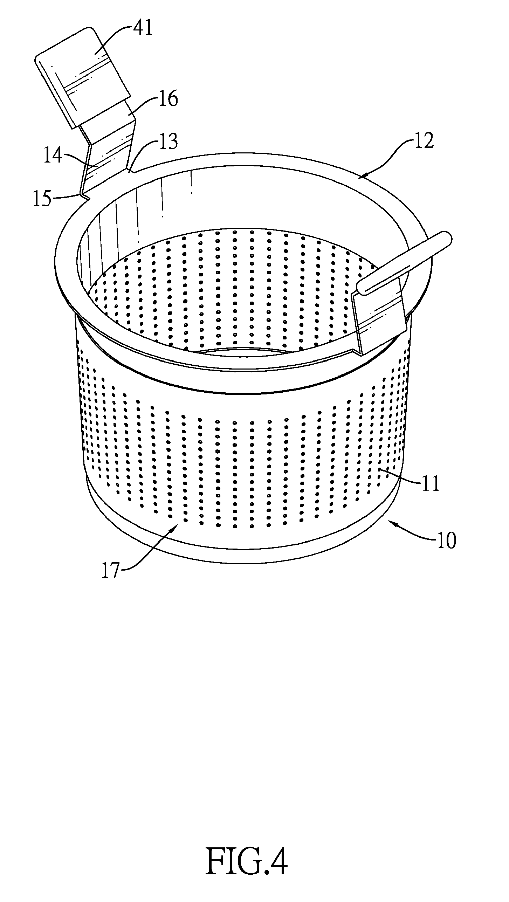

The clamping arm 16 is obliquely formed on and protrudes upwardly and outwardly from the upper end of the elastic panel 14. Then, the cup body 17 can be picked up from the body of the teapot 20 by pulling the clamping arms 16 by fingers to clean out the tea leaves off the cup body 17. Preferably, with reference to Fig. 4, each one of the connecting tabs 13 further has an insulation jacket 41 mounted around the clamping arm 16 of the corresponding connecting tab 13 to prevent the temperature of the clamping arms 16 from burning the user's fingers.

In use, with reference to Fig. 2, the tea leaves are put in the cup body 17 of the net canister 10 and the cup body 17 is mounted in the chamber of the body of the teapot 20 via the mouth of the body of the teapot 20. The connecting tabs 13 abut the annular holding face 21 of the teapot 20 to hold the cup body 17 in the chamber of the body of the teapot 20, and the elastic panels 14 may abut the annular abutting wall 22 of the body of the teapot 20. When the hot water is poured into the net canister 10, the hot water will brew the tea leaves and flow into the chamber of the body of the teapot 20 via the filtering holes 11.

As the water level of the hot water rises close to the mouth of the body of the teapot 20, the clamping arms 16 are moved away from each other by user's fingers to enable the lid 24 to mount between the elastic panels 14 and to abut the connecting tabs 13 and the cup flange 12 above the mouth of the body of the teapot 20. When the user's fingers separate from the clamping arms 16, the elastic panels 14 and the connecting tabs 13 will clamp the bottom flange 23 of the lid 24 at the clamping sections 15 by the elastic forces of the elastic panels 14 to enable the lid 24 to close the mouth of the body of the teapot 20. Then, the lid 24 is securely held and mounted on the top of the body of the teapot 20 and is not separate from the mouth of the body of the teapot 20 to prevent the tea leaves or the hot water from flowing out of the body of the teapot 20 via the net canister 10 to scald user's fingers.

In addition, with reference to Fig. 3, the net canister 10 of the filtering device in accordance with the present invention also can be used on another kind of teapot 20 without having the annular abutting wall 22. In use, the connecting tabs 13 abut the annular holding face 21 of the body of the teapot 20 to hold the net canister 10 in the chamber of the body of the teapot 20. After putting the tea leaves and pouring the hot water into the cup body 17, the lid 24 also can be held securely on the top of the body of the teapot 20 by the engagement between the bottom flange 23, the connecting tabs 13 and the elastic panels 14 at the clamping sections 15 as above-mentioned. Furthermore, with reference to Fig. 4, the insulation jackets 41 that are mounted around the clamping arms 16 also can be used to prevent from scalding the user's fingers.

According to the above-mentioned features of the filtering device for a teapot 20, the connecting tabs 13 and the elastic panels 14 can be used to clamp the bottom flange 23 of the lid 24 above the mouth of the body of the teapot 20 without opening or separating from the body of the teapot 20. Then, the user's fingers will not scalded by the hot water or the water vapor. In addition, the clamping arms 16 of the net canister 10 are set to extend away from the lid 24 of the teapot 20, and this can prevent the user's fingers from touching the lid 24 with high temperature. Furthermore, after using the teapot 20, the tea leaves can be clean out of the teapot 20 easily by picking the cup body 17 up from the body of the teapot 20 than the honeycomb net that is mounted in the spout 51 of the conventional teapot 20.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A filtering device for a teapot (20), **characterized in that** the filtering device comprises:
a net canister (10) and having:
a cup body (17) having:
a close bottom;
an opening top;
an external surface; and
multiple filtering holes (11) formed through the external surface of the cup body (17) at intervals; and
a cup flange (12) formed around the opening top of the cup body (17) and having:
at least one connecting tab (13) formed horizontally on the cup flange (12) and each one of the at least one connecting tab (13) having:
a free end being opposite to the cup flange (12);
an elastic panel (14) obliquely formed on and protruding upwardly and inwardly from the free end of the connecting tab (13) to form an angle between the elastic panel (14) and the connecting tab (13); and
a clamping section (15) being formed at a connection of the elastic panel (14) and the connecting tab (13).

2. The filtering device as claimed in claim 1, wherein
the elastic panel (14) of each one of the at least one connecting tab (13) has an upper end; and
each one of the at least one connecting tab (13) has a clamping arm (16) obliquely formed on and protruding upwardly and outwardly from the upper end of a corresponding elastic panel (14).

3. The filtering device as claimed in claim 2, wherein each one of the at least one connecting tab (13) has an insulation jacket (41) mounted around a corresponding clamping arm (16).
